# EUROPEAN PATENT APPLICATION

(11) **EP 3 799 725 A1**
(43) Date of publication of application: **07.04.2021**
(21) Application number: 20159349.8
(22) Date of filing: 25.02.2020
(51) Int. Cl.: A24B 3/14, A24C 5/60, A23N 12/08

(54) **APPARATUS AND METHOD FOR DRYING CONSUMABLES**

(30) Priority: 01.10.2019 SG 10201909197
(71) Applicant: Universal Angel Corp., Road Town, Tortola (VG)
(72) Inventor: Cheng, Ng Siew, ROAD TOWN, TORTOLA (VG)
(74) Representative: dompatent von Kreisler Selting Werner - Partnerschaft von Patent- und Rechtsanwälten mbB

(57) **Abstract**

Disclosed is an apparatus for drying a consumable, comprising a conveyor system for receiving the consumable; a first drying module comprising a first drying unit to provide cold drying and a second drying unit to provide heat drying; wherein an exposure of the consumable to the first drying unit and the second drying unit is adjustable via a control of a speed of the conveyor system.

## Description

### TECHNICAL FIELD

The present invention relates to an apparatus and process for drying consumables.

### BACKGROUND

The following discussion of the background is intended to facilitate an understanding of the present disclosure only. It should be appreciated that the discussion is not an acknowledgement or admission that any of the material referred to was published, known or is part of the common general knowledge of the person skilled in the art in any jurisdiction as of the priority date of the invention.

Known methods for drying consumables typically involve the application of heat for the removal of moisture. Methods or processes for drying consumables may be incorporated into a manufacturing process.

In particular, manufacturing of consumables such as tobacco products may include one or more steps of drying in the manufacturing process.

A known method is to mix and ground various types of tobacco materials into a power form, i.e. grind the mixture of tobacco materials into fine powder of less than 120 micrometres (µm). The ground power may then be combined with one or more binders to improve the overall tensile strength. The combined mixture is then blended with a liquid solution comprising water to form an aqueous slurry.

The aqueous slurry may be in a paste form. The paste can then be cast and dried to form one or more reconstituted tobacco sheets.

The paste can be laid onto a dryer belt by means of a roll coater system, extrusion, or a laminator, to form a sheet, which is then dried to remove the excess water/moisture and subsequently cut to a desired dimension for package.

In another known method, tobacco materials may be mixed in a water tank to form a pulp. The pulp, which contains tobacco-flavoured liquid, may then subsequently undergo a paper-making process to form a web before being dried.

Other known methods of manufacturing tobacco products include rolling method, extrusion method, dry base type process, molding process, etc.

It is appreciable that each of the aforementioned methods typically includes a drying step. The drying step aims at the removal of excess moisture from the tobacco products, and may be enabled by one or more heating devices.

Currently the heating devices may operate at a temperature of 100 Degrees Celsius (°C) and above, for a predetermined amount of time, to dry the mixture. However, at such relatively high temperature, the aroma and taste of the tobacco product(s) may be compromised.

There exists a need to alleviate the aforementioned problems.

### SUMMARY

The disclosure was conceptualised to provide one or more methods and apparatus for drying consumables such as, but not limited to, tobacco products. The methods and apparatus are especially suited for tobacco products such as reconstituted tobacco-based products, or intermediate tobacco-based products.

A technical solution for drying consumables, via the reduction or removal of moisture under relatively low temperature, is provided. It is appreciable that the drying steps may be part of the manufacturing process of consumables, such as fruits, vegetables and tobacco products, and/or may be a separate process for drying consumables.

Another technical solution for drying consumables is the provision of an apparatus for the controlled drying of consumables. The controlled drying may be achieved via heat drying and cold drying. The apparatus comprises a conveyor system for the consumables to be placed thereon. Exposure to each drying unit may be controlled via varying the speed of the conveyor system.

The disclosure is particularly suited for producing reconstituted tobacco sheets in which moisture is reduced or removed without affecting one or more inherent properties of the base tobacco materials. Such an arrangement retains the taste and flavour of consumables such as tobacco, thereby keeping the quality of the tobacco as close to its leafy characteristics as possible with the flavour and aroma intact. It is appreciable that the apparatus and method may be applied to other consumables such as fruits and vegetables.

According to an aspect of the disclosure there is a method for drying tobacco products comprising the steps of: (a.) mixing a plurality of base tobacco materials to form a base mix; (b.) obtaining an aqueous mixture from the base mix; (c.) positioning the aqueous mixture onto a conveyor system; and (d.) drying the aqueous mixture; wherein the drying step includes exposing the aqueous mixture in an environment at a temperature of less than 100 degrees Celsius.

In some embodiments, the step of drying the aqueous mixture includes maintaining a relative humidity level of the environment to be less than 50%.

In some embodiments, the base tobacco materials include tobacco dust, tobacco leaves and/or recycled/reconstituted tobacco material.

In some embodiments, the base mix comprises natural ingredients including, but not limited to, cloves, kemenyan incense, natural resin, flowers, herbs, tea, fruits, and all types of plants.

In some embodiments, the base mix is in the form comprising at least one of a sheet, a roll, a pallet, powder.

In some embodiments, the method may include a sub-step of laminating the aqueous mixture.

In some embodiments, the method further includes the step of partially drying the aqueous mixture to a predetermined level of moisture level before the step of lamination.

In some embodiments, the aqueous mixture is a slurry or a paste.

In some embodiments, the step of drying the aqueous mixture includes a sub-step of controlling a temperature of the environment to below zero degrees Celsius.

In some embodiments, the step of drying the aqueous mixture includes maintaining a relative humidity level of the environment to be less than 50% in conjunction with or after controlling the temperature of the environment.

In some embodiments, the step of drying the aqueous mixture includes a sub-step of controlling a temperature of the environment to be between 26 degrees Celsius and 99 degrees Celsius. The sub-step of controlling the temperature may be followed by a sub-step of maintaining a relative humidity level of the environment to be less than 50%.

In some embodiments, the environment is an enclosed environment. The enclosed environment may be a tunnel, a room or a staging area.

According to another aspect of the disclosure there is an apparatus for drying a tobacco product comprising an enclosed area for receiving the tobacco product; a device for reduction or removal of moisture from the tobacco product; wherein the enclosed area is maintained at a temperature of less than 100 degrees Celsius.

In some embodiments, the device for removal of moisture is arranged in fluid communication with a cooling element for condensation of the removed moisture.

In some embodiments, the cooling element is arranged in fluid communication with a humidity controller for evaporation of moisture into an ambient environment.

In some embodiments, the device for removal of moisture is arranged in fluid communication with a super cooler for regulation or control of the temperature within the enclosed area at a temperature below room temperature. The temperature below room temperature may be below zero (0) degree Celsius, or well below 0 degree Celsius to achieve a super-cooled or freeze-drying effect.

In some embodiments, the device for removal of moisture is arranged in fluid communication with a heater for regulation or control of the temperature within the enclosed area at a temperature above room temperature.

In some embodiments, the apparatus further comprises a two-stage moisture removal arrangement including the super cooler for regulation of the temperature within the enclosed area below room temperature and the humidity controller for regulation of relative humidity within the enclosed area.

In some embodiments, the apparatus further comprises a two-stage moisture removal arrangement including the heater for regulation of the temperature within the enclosed area to a temperature above room temperature and the humidity controller for regulation of relative humidity within the enclosed area.

In some embodiments, the enclosed area includes a conveyor system. The conveyer system may include a conveyor belt, and the conveyor belt may be arranged in a manner such that it can be straight, spiralled or multi-layered.

In some embodiments, the device for removal of moisture is a vacuum pump.

According with another aspect of the disclosure there is a method for drying a tobacco product comprising the steps of: (a.) providing an enclosed area to receive the tobacco product; and (b.) providing a device for removal of moisture from the tobacco product to a desired level; wherein the enclosed area is maintained at a temperature of less than 100 degrees Celsius.

In some embodiments, the method further includes a step of maintaining the enclosed area at a temperature of below zero degrees Celsius.

In some embodiments, the method further includes a step of maintaining the enclosed area at a temperature of 15 degrees Celsius to 40 degrees Celsius.

In some embodiments, the method further includes a step of maintaining the enclosed area at a relative humidity of less than 50%.

According to another aspect of the disclosure there is an apparatus for drying a consumable, comprising a conveyor system for receiving the consumable; a first drying module comprising a first drying unit to provide cold drying and a second drying unit to provide heat drying; wherein an exposure duration of the consumable to the first drying unit and the second drying unit is adjustable via a control of the speed of the conveyor system.

### BRIEF DESCRIPTION OF DRAWINGS

One or more embodiments of the invention will be described, by way of example only, with reference to the accompanying drawings, in which:

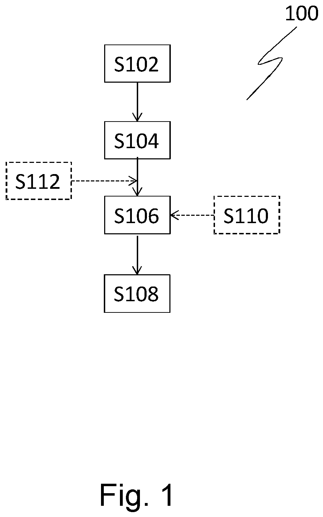

Fig. 1 shows a flow chart of a method for drying a consumable, the consumable in the form of a tobacco product;
Fig. 2 shows an embodiment of an apparatus for drying a consumable, the consumable in the form of a tobacco product, via a natural drying process;
Fig. 3 shows an embodiment of an apparatus for drying a consumable, the consumable in the form of a tobacco product, via a natural drying process with humidity control (dry air method);
Fig. 4 shows an embodiment of an apparatus for drying a consumable, the consumable in the form of a tobacco product, via temperature control to reduce temperature of an enclosed area (cool air method);
Fig. 5 shows an embodiment of an apparatus for drying a consumable, the consumable in the form of a tobacco product, via temperature control to reduce temperature of an enclosed area in conjunction with humidity control;
Fig. 6 shows an embodiment of an apparatus for drying a consumable, the consumable in the form of a tobacco product, via temperature control to increase temperature of an enclosed area;
Fig. 7 shows an embodiment of an apparatus for drying a consumable, the consumable in the form of a tobacco product, via temperature control to increase temperature of an enclosed area in conjunction with humidity control;
Fig. 8a shows another embodiment of an apparatus for drying a consumable via a combination of cold drying and heat drying;
Fig. 8b (i) and 8b (ii) show two combinations of first drying units, second drying units and third drying units of the apparatus of Fig. 8a;
Fig. 8c shows another possible arrangement of the first drying units, the second drying units and the third drying units with the first drying units thermally shielded from the second drying units;
Fig. 9a shows a temperature profile of an arbitrary consumable product, the arbitrary consumable product having relatively constant exposure to heat drying and cold drying; and
Fig. 9b shows a temperature profile of the arbitrary consumable product, the arbitrary consumable product having varying exposure to heat drying and cold drying with a higher exposure to cold drying.

### DESCRIPTION

Throughout the description, references to temperature are in degree Celsius (°C) and the lower and upper limits of any temperature may vary up to ±20%.

Throughout the description, terms such as 'heating' and 'cooling' are relative terms and may differ depending on a reference ambient or room temperatures.

Throughout the description, the term 'consumables' broadly refers to items that is fit for consumption by a human being via eating, drinking and/or inhaling.

Throughout the description, the term 'tobacco product(s)' includes intermediate products and end products. In particular, intermediate tobacco product(s) may include reconstituted tobacco materials, such as reconstituted tobacco sheet(s), which may form at least part of or whole of an intermediate product for an end product such as cigarettes.

According to an aspect of the disclosure there is a method 100 for drying tobacco products. The method 100 is especially suited as part of the process for the manufacture of one or more tobacco products in various forms, dimensions and/or shapes. The tobacco products may include tobacco sheets, tobacco rolls formed via various methods.

The method may comprise the steps of: (a.) mixing a plurality of base tobacco materials to form a base mix (step S102); (b.) obtaining an aqueous mixture from the base mix (step S104); (c.) positioning the aqueous mixture onto a conveyor system to form a sheet (step S106); and (d.) drying the resulting sheet (step S108); wherein the drying step (step S108) includes exposing the sheet in an environment at a temperature of less than 100 degrees Celsius.

The method may be based on a combination of temperature and/or humidity control. The temperature control is below 100 °C to preserve the inherent properties of the base tobacco material.

It is contemplated that the humidity control is aimed at maintaining a relative humidity level of the environment to be less than 50%.

The base tobacco materials may include at least one of tobacco dust, tobacco leaves and/or recycled/reconstituted tobacco material. The base mix may include natural ingredients such as, but not limited to, cloves, kemenyan incense, natural resin, flowers, herbs, tea, fruits, and all types of plants.

The base mix may be in a form comprising at least one of a sheet, a roll, a pallet, powder.

The step of positioning the aqueous mixture to onto a conveyor system may include various sub-steps. In one particular sub-step, the positioning may include a sub-step of laminating (step S110) the aqueous mixture.

One or more intermediate drying steps (step S112) may be introduced before the positioning step. Such intermediate drying steps provide for the partial drying of the aqueous mixture to a desired level of moisture level, before the step of lamination.

In some embodiments, the aqueous mixture is a slurry or a paste.

The drying steps may take place in an enclosed environment or area, such as a tunnel or a staging room.

In some embodiments, the intermediate drying step(s) or the final drying step includes a sub-step of controlling a temperature of the enclosed environment to be below room temperature, and specifically between a suitable sub-zero temperature (i.e. below zero degrees Celsius) and 25 degrees Celsius.

In some embodiments, the intermediate drying step(s) or the final drying step includes a sub-step of controlling a temperature of the enclosed environment to be between 15 degrees Celsius to 30 degrees Celsius.

In some embodiments, the intermediate drying step(s) or the final drying step includes a sub-step of controlling a temperature of the environment to be above room temperature, and specifically between 26 degrees Celsius and 99 degrees Celsius.

In some embodiments, the intermediate drying step(s) or the final drying step include maintaining a relative humidity level of the enclosed environment to be less than 50%. The maintenance of relative humidity level may be performed simultaneously or after controlling the temperature of the enclosed environment.

One or more of the aforementioned steps, in particular the drying step (step S108) and/or the intermediate drying steps (step S112), can be enabled by an apparatus for drying the tobacco product.

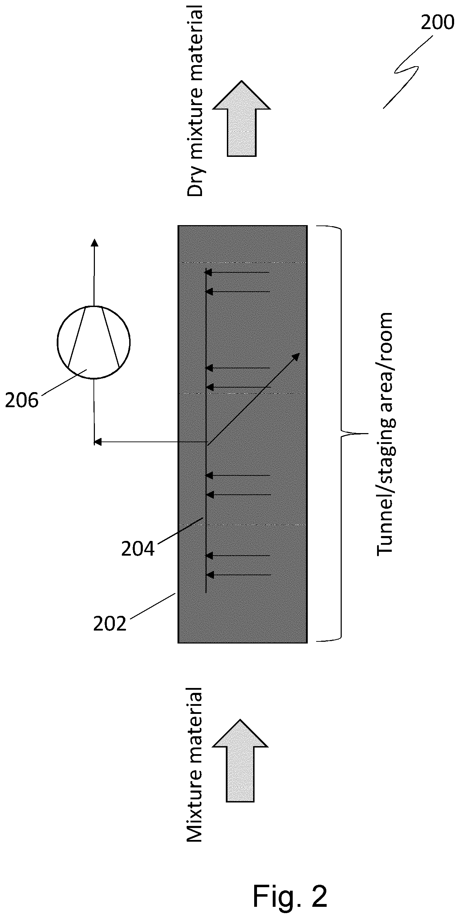

Figs. 2 to 7 show various embodiments of apparatuses for drying a tobacco product. It is contemplated that the apparatuses shown in Figs. 2 to 7 may be suitably deployed for use with different manufacturing processes for various tobacco products or intermediate tobacco products that involve drying steps.

With reference to Fig. 2, an apparatus 200 may include an enclosed area 202 for receiving a tobacco mixture. The enclosed area 202 comprises a rest area 204 for the tobacco mixture to be laid upon for the removal of moisture. The enclosed area 202 may be arranged in fluid communication with a device 206 for facilitating the removal of moisture from the tobacco mixture. It is envisaged that the apparatus 200 may be part of a manufacturing process of a tobacco product and/or a dedicated drying apparatus for drying a tobacco mixture.

The enclosed area 202 may be a tunnel, a staging area, or a room.

The rest area 204 may be a conveyor system 204. The conveyor system 204 comprises one or more conveyor belts or drying belts to facilitate drying of the tobacco mixture. It is appreciable that the tobacco mixture may be in the form of one or more sheets, rolls, pallets, rods, powder, slurry, paste, in any suitable size, shapes and dimensions etc.

In some embodiments, the conveyor system 204 includes a belt. The belt can be shaped and dimensioned in accordance with space considerations. The belt may include one or more straight portions, spiralled portions, multi-layered portions.

The device 206 for facilitating the removal of moisture from the tobacco mixture may be an air pump, such as a vacuum pump.

It is envisaged that one or more measurement devices, such as one or more pressure sensors (not shown), one or more humidity sensors, or one or more thermometers, may be positioned at desired locations within or around the enclosed area 202. Such measurement devices may be arranged in signal or data communication with the device 206 to transmit or receive data therefrom for purpose of activating or de-activating the device 206.

The apparatus shown in Fig. 2 will be described in the context of its operation. A tobacco mixture may enter the enclosed area 202 at an ambient temperature (i.e. room temperature) and may be positioned/rested on the rest area 204 for drying. The device 206 is then activated in accordance with pre-defined or pre-set user defined parameters. For example, the tobacco mixture entering the enclosed area 202 may have a moisture percentage of between 10-40%. After drying the moisture within the tobacco mixture is reduced to a desired level. Samples of the dried tobacco mixture may be tested in a laboratory environment for quality checks that the moisture level has been reduced to the desired level.

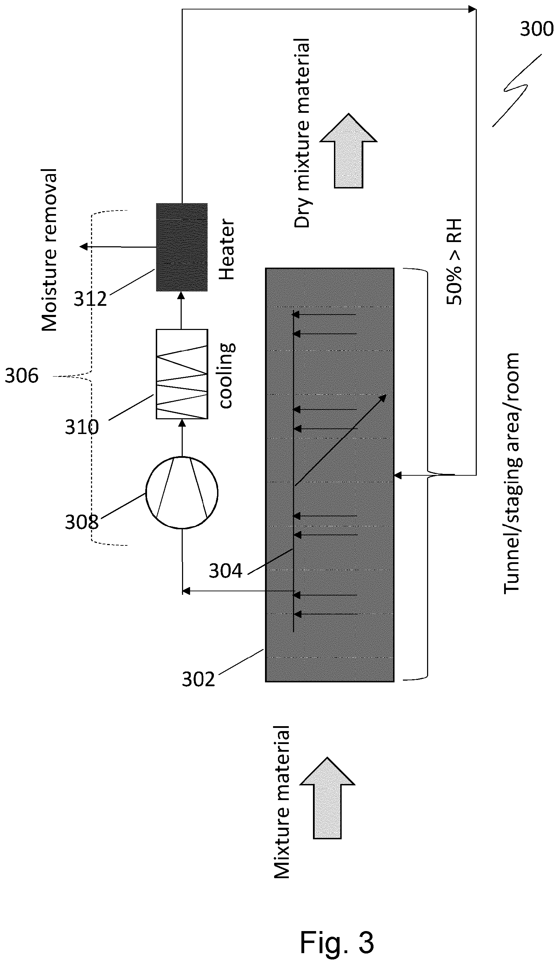

Fig. 3 shows another embodiment of an apparatus 300 for drying a tobacco product. In this embodiment, the apparatus 300 include an enclosed area 302 for receiving a tobacco mixture. The enclosed area 302 comprises a rest area 304 for the tobacco mixture to be laid upon for the removal of moisture. The enclosed area 302 may be arranged in fluid communication with a device 306 for facilitating the removal of moisture from the tobacco mixture. It is envisaged that the apparatus 300 may be part of a manufacturing process of a tobacco product and/or a dedicated drying apparatus for drying a tobacco mixture.

The enclosed area 302 and rest area 304 may be similar to the enclosed area 202 and rest area 204.

The device 306 for facilitating the removal of moisture from the tobacco mixture may include an air pump, such as a vacuum pump 308, a cooler device 310 for condensation and a heater 312 for humidity control.

It is envisaged that one or more measurement devices, such as one or more pressure sensors (not shown), one or more humidity sensors, or one or more thermometers, may be positioned at desired locations within or around the enclosed area 302. Such measurement devices may be arranged in signal or data communication with the device 306 to transmit or receive data therefrom for purpose of activating or de-activating the device 308, 310 and/or 312.

The apparatus shown in Fig. 3 will be described in the context of its operation. A tobacco mixture may enter the enclosed area 302 at an ambient temperature and rested on the rest area 304. The device 306 is then activated in accordance with pre-defined or pre-set user defined parameters. For example, the tobacco mixture entering the enclosed area 302 may have a moisture percentage of between 10-40%. After drying the moisture within the tobacco mixture is reduced to a desired level. Samples of the dried tobacco mixture may be tested in a laboratory environment for quality checks that the moisture level has been reduced to the desired level.

It is contemplated that the devices 308, 310 and/or 312 may be activated in sequence or concurrently in a manner such as to achieve the desired moisture reduction or moisture removal.

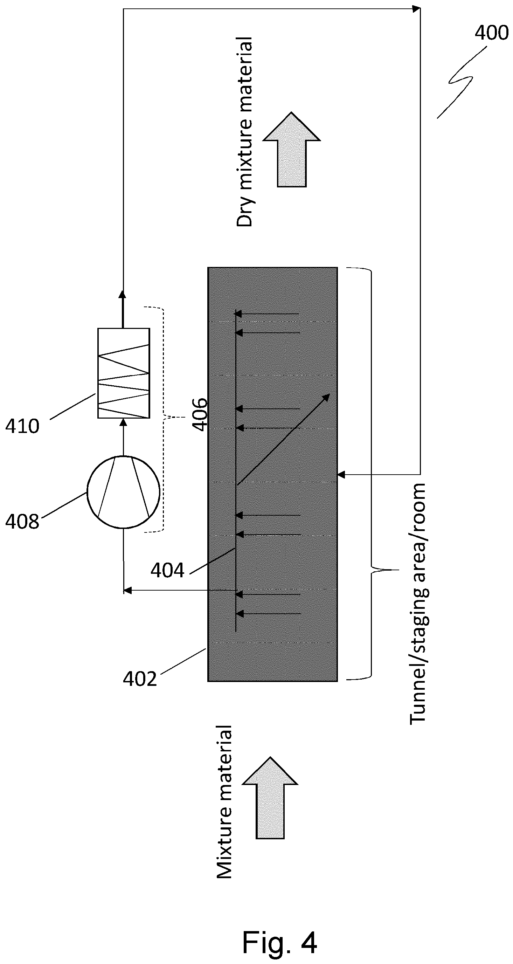

Fig. 4 shows another embodiment of an apparatus 400 for drying a tobacco product. In this embodiment, the apparatus 400 include an enclosed area 402 for receiving a tobacco mixture. The enclosed area 402 comprises a rest area 404 for the tobacco mixture to be laid upon for the removal of moisture. The enclosed area 402 may be arranged in fluid communication with a device 406 for facilitating the removal of moisture from the tobacco mixture. It is envisaged that the apparatus 400 may be part of a manufacturing process of a tobacco product and/or a dedicated drying apparatus for drying a tobacco mixture.

The enclosed area 402 and rest area 404 may be similar to the enclosed area 202 and rest area 204.

The device 406 for facilitating the removal of moisture from the tobacco mixture may include be an air pump, such as a vacuum pump 408 and a super-cooler 410.

It is envisaged that one or more measurement devices, such as one or more pressure sensors (not shown), one or more humidity sensors, or one or more thermometers, may be positioned at desired locations within or around the enclosed area 402. Such measurement devices may be arranged in signal or data communication with the device 406 to transmit or receive data therefrom for purpose of activating or de-activating the pump 408 and super-cooler 410.

The apparatus shown in Fig. 4 will be described in the context of its operation. A tobacco mixture may enter the enclosed area 402 at a pre-set super-cooled temperature and rested on the rest area 404. The device 406 is then activated in accordance with pre-defined or pre-set user defined parameters. For example, the tobacco mixture entering the enclosed area 402 may have a moisture percentage of between 10-40%. After drying the moisture within the tobacco mixture is reduced to a desired level. Samples of the dried tobacco mixture may be tested in a laboratory environment for quality checks that the moisture level has been reduced to the desired level. It is appreciable that the apparatus 400 shown in Fig. 4 is operable to dry the tobacco mixture via super cooling. The temperature for super-cooling is preferably sub-zero or well below zero degree Celsius. In some embodiments, the temperature may be controlled between sub-zero temperatures to around room temperature (25°C). Such an arrangement suitably allows for drying of the tobacco mixture to be achieved while maintaining the quality of the tobacco as close to its leafy characteristics as possible with the flavour and aroma intact. In particular, sub-zero temperatures may provide freeze-drying of the tobacco mixture.

It is contemplated that the pump 408 and super-cooler 410 may be activated in sequence or concurrently in a manner such as to achieve the desired moisture reduction or moisture removal.

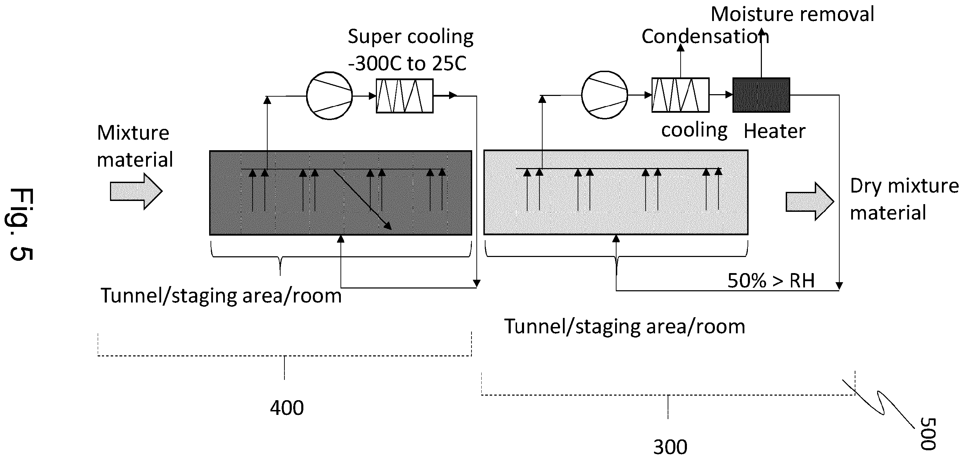

Fig. 5 shows another embodiment of an apparatus 500 for drying a tobacco product. The embodiment shown in Fig. 5 may be regarded a combination of apparatus 400 and apparatus 300 arranged in sequence to provide a two stage moisture removal process.

The apparatus shown in Fig. 5 will be described in the context of its operation. A tobacco mixture may enter the enclosed area 402 at a pre-set super-cooled temperature and rested on the rest area 404. The device 406 is then activated in accordance with pre-defined or pre-set user defined parameters. For example, the tobacco mixture entering the enclosed area 402 may have a moisture percentage of between 10-40%. After drying the moisture within the tobacco mixture is reduced to a desired level. Samples of the dried tobacco mixture may be tested in a laboratory environment for quality checks that the moisture level has been reduced to the desired level. This is regarded as the first stage of moisture reduction. After the first stage the partially dried tobacco product is sent to the apparatus 300 and enters the enclosed area 302 at an ambient temperature and rested on the rest area 304. The device 306 is then activated in accordance with pre-defined or pre-set user defined parameters to further dry the tobacco product via relative humidity control of the enclosed area.

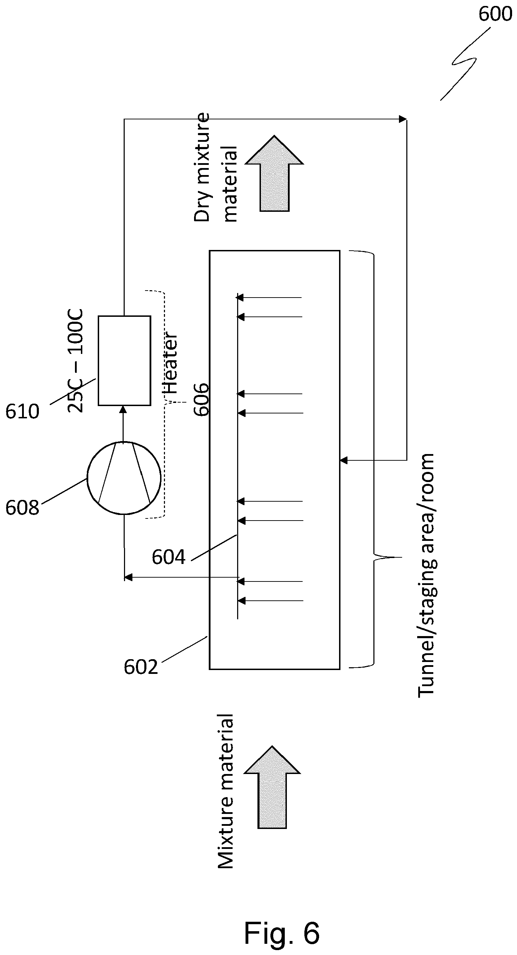

Fig. 6 shows yet another embodiment of an apparatus 600 for drying a tobacco product. In this embodiment, the apparatus 600 include an enclosed area 602 for receiving a tobacco mixture. The enclosed area 602 comprises a rest area 604 for the tobacco mixture to be laid upon for the removal of moisture. The enclosed area 602 may be arranged in fluid communication with a device 606 for facilitating the removal of moisture from the tobacco mixture. It is envisaged that the apparatus 600 may be part of a manufacturing process of a tobacco product and/or a dedicated drying apparatus for drying a tobacco mixture.

The enclosed area 602 and rest area 604 may be similar to the enclosed area 202 and rest area 204.

The device 606 for facilitating the removal of moisture from the tobacco mixture may include an air pump, such as a vacuum pump 608 and a heater 610.

It is envisaged that one or more measurement devices, such as one or more pressure sensors (not shown), one or more humidity sensors, or one or more thermometers, may be positioned at desired locations within or around the enclosed area 602. Such measurement devices may be arranged in signal or data communication with the device 606 to transmit or receive data therefrom for purpose of activating or de-activating the pump 608 and heater 610.

The apparatus shown in Fig. 6 will be described in the context of its operation. A tobacco mixture may enter the enclosed area 602 at a pre-set temperature and rested on the rest area 604. The device 606 is then activated in accordance with pre-defined or pre-set user defined parameters. For example, the tobacco mixture entering the enclosed area 602 may have a moisture percentage of between 10-40%. After drying the moisture within the tobacco mixture is reduced to a desired level. Samples of the dried tobacco mixture may be tested in a laboratory environment for quality checks that the moisture level has been reduced to the desired level. It is appreciable that the apparatus 400 shown in Fig. 6 is operable to dry the tobacco mixture via relative heating above the room temperature. The temperature may be between 25 to 100 degrees Celsius.

It is contemplated that the pump 608 and heater 610 may be activated in sequence or concurrently in a manner such as to achieve the desired moisture reduction or moisture removal.

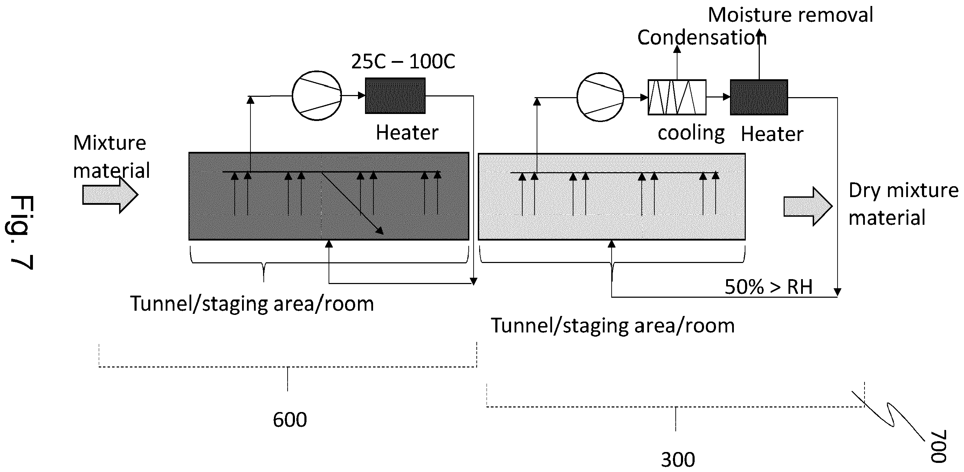

Fig. 7 shows another embodiment of an apparatus 700 for drying a tobacco product. The embodiment shown in Fig. 7 may be regarded a combination of apparatus 600 and apparatus 300 arranged in sequence to provide a two-stage moisture removal process.

The apparatus shown in Fig. 7 will be described in the context of its operation. A tobacco mixture may enter the enclosed area 602 at a pre-set heated temperature (between 25 degrees Celsius and 100 degrees Celsius) and rested on the rest area 604. The device 606 is then activated in accordance with pre-defined or pre-set user defined parameters. For example, the tobacco mixture entering the enclosed area 602 may have a moisture percentage of between 10-40%. After drying the moisture within the tobacco mixture is reduced to a desired level. Samples of the dried tobacco mixture may be tested in a laboratory environment for quality checks that the moisture level has been reduced to the desired level. This is regarded as the first stage of moisture reduction. After the first stage the partially dried tobacco product is sent to the apparatus 300 and enters the enclosed area 302 at an ambient temperature and rested on the rest area 304. The device 306 is then activated in accordance with pre-defined or pre-set user defined parameters to further dry the tobacco product further dry the tobacco product via relative humidity control of the enclosed area.

It is contemplated that the apparatus 200, 300, 400, 500, 600, 700 may be cascaded in various combinations to create additional embodiments. This is to the extent that it does not contradict the intent of the disclosure.

It is also contemplated that each apparatus 200, 300, 400, 500, 600, 700, or combinations thereof, may be applied to the drying of non-tobacco products.

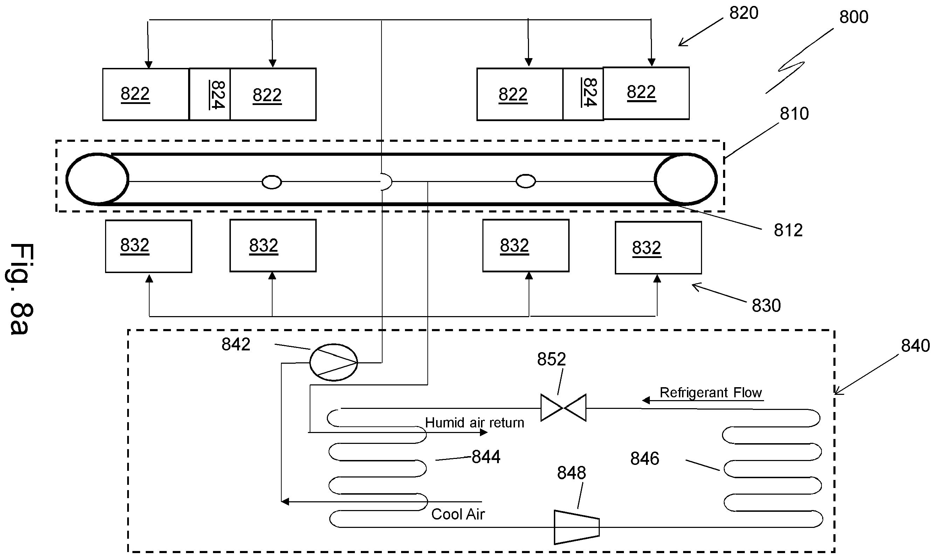

Fig. 8a shows another embodiment of an apparatus 800 for drying consumables. The embodiment shown in Fig. 8a may be suited for drying consumables such as tobacco leaves, and/or other consumables such as vegetables, fruits, other plant-based and/or animal-based products.

The apparatus 800 comprises a conveyor system 810, a first drying module 820, a second drying module 830, and a heat exchange system 840.

The conveyor system 810 may comprise a conveyor belt 812 on which consumables may be placed or positioned. The conveyor belt 812 may be configured by a controller (not shown) to move at a number of predetermined speeds. It is appreciable that the speed of the conveyor belt 812 may be varied in such a manner so as to achieve optimal drying for different types consumable products. The conveyor belt 812 may include operations or operational states received from the controller to stop the conveyor belt, slow down the movement of the conveyor belt 812, or to speed up the movement of the conveyor belt 812.

The first drying module 820 and the second drying module 830 may be arranged on opposing sides of the conveyor belt 812, for example, on a top portion and a bottom portion of the conveyor belt 812.

The first drying module 820 includes a plurality of first drying units 822 and a plurality of second drying units 824. Fig. 8a shows four of the first drying units 822 and two of the second drying units 824, each of the second drying unit 824 sandwiched between two first drying units 822. It is however contemplated that the number of first and second drying units 822, 824 may be any positive integer more than two. The first drying units 822 and second drying units 824 may be arranged proximate or adjacent one another and on one side of the conveyor belt 812.

Each first drying unit 822 may be a cold drying unit, and each second drying unit 824 may be a heater unit. In some embodiments, the cold drying unit 822 may be a freeze drying unit and the heater unit 824 may be an infrared heater. The heater unit 824 may alternatively include heating modules based on radio frequency heating, dielectric heating, microwave heating, ultrasonic wave heating, hot air dryer and/or other forms of drying via provision of heat energy as known to a skilled person. The first drying module 820 may therefore be configured to provide drying via both cold drying and heat drying. A consumable may be exposed to the first drying unit 822 for a first exposure duration and be exposed to the second drying unit 824 for a second exposure duration. For example, where the second drying unit 824 comprises one or more infrared heaters, the infrared heater(s) may provide a relatively high temperature (above 100 degrees Celsius) for a short second exposure duration. An example of the relatively high temperature may include a temperature of above 1200 degrees Celsius. The infrared heater(s) may operate at different wavelengths to produce the desired high temperatures. In general, it is expected that the exposure duration of a consumable to a higher temperature will be same or less than the exposure duration of the consumable to a lower temperature.

In some embodiments, the cold drying unit may operate at a range of -20 degrees Celsius and below. In other embodiments, the cold drying unit may operate at -50 degree Celsius and below. The relatively low temperature may be achieved via the provision of a heat exchange system 840 (to be described). Examples of the heat exchange system 840 may include a refrigeration system and a nitrogen cooling system.

The second drying module 830 includes a plurality of third drying units 832. Fig. 8a shows four of the third drying units 832 but it is contemplated that the number of third drying units 832 may be any positive integer more than two. In addition, the number of third drying units 832 may be more than, less than and same as the number of first drying units 822 and second drying units 824.

Each third drying unit 832 may be a cold drying unit, and may be similar to the first drying unit 822. The second drying module 830 may therefore be configured to provide drying via freeze drying. In some embodiments, the second drying module 830 can include one or more super-coolers.

It is contemplated that as the consumable(s) positioned on the conveyor belt 812 passes the different drying units of the first drying module 820 and the second drying module 830, the consumables is exposed to different amount of infrared radiation and/or freeze drying. Varying the speed of the conveyor belt 812 and/or the intensity of the infrared radiation and freeze drying can vary the amount of the first and/or second exposure duration of the consumables and/or the drying effect of the consumable(s). In other words, it is contemplated that the amount of drying may be achieved by the exposure duration and the intensity of heating/ cooling/ freezing associated with each drying unit 822, 824, and/or 832.

The heat exchange system 840 operates to regulate the amount of moisture in the vicinity or surrounding enclosed environment the apparatus 800 is positioned in, and can therefore contribute to the drying of the consumable. The heat exchange system 840 comprises a fan mechanism (e.g. a blower) 842 for supplying cool air to the first drying module 820 and/or second drying module 830, an evaporator 844 for absorption of heat, a condenser 846 for heat dissipation, and a compressor 848 for the compression of a refrigerant, and an expansion valve 852 for the expansion of the refrigerant as it changes state from a liquid to gas. In some operation modes, the heat exchange system 840 functions as a dehumidifier to remove moisture from the vicinity and environment of the apparatus 800. The heat exchange system 840 may also be configured to provide cooling of the vicinity of the apparatus 800 and/or provide cooling associated with the cold drying units.

In some embodiments, the cold drying unit 822 and the heater unit 824 may be thermally isolated in operation so as to provide localized heat drying to a region of the consumable while simultaneously providing cold drying to another region of the consumable.

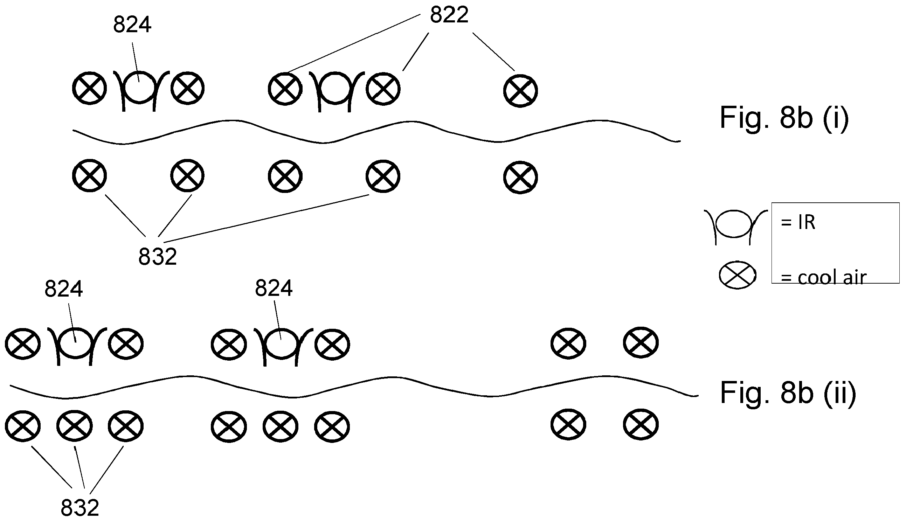

Fig. 8b(i) and 8b(ii) show a particular operating mode of the apparatus 800.

Fig. 8b(i) shows the first drying module 820 having first drying units 822, second drying units 824, and third drying units 832 arranged in one possible configuration. The total number of drying units for heat drying is less than the number of drying units for cold drying. Such an arrangement is suitable where localized heat drying exposure is preferred in an environment of relatively low temperature.

Fig. 8b(ii) shows the second drying module 830 having first drying units 822, second drying units 824 and third drying units 832. Compared to the embodiment shown in Fig. 8b(i), there are additional third drying units 832 arranged to supplement the drying produced by the first and second drying units 824.

In each configuration, the first drying module 820 may be positioned on one side (e.g. a top side) of the conveyor system 810 and the second drying module 830 may be positioned on another side (e.g. a bottom side) of the conveyor system 810.

In operation, the first drying module 820 may be activated with or without the second drying module 830. The consumable is then positioned on the conveyor belt 812, and as the conveyor belt 812 is activated and moves at a controlled speed, the consumable is dried, alternating between heat dry and cold dry. The consumable is exposed to various amount of the infrared radiation or the cool air depending on the speed of the conveyor belt 812. It is appreciable that the sequence of activating the first drying module 820, second drying module 840, and the conveyor system 810 may be varied to suit different operating conditions of the apparatus 800.

In addition or as an alternative to the movement of the conveyor belt 812, it is contemplated that exposure durations to the first drying module 820 and the second drying module 830 may be varied by switching each of the drying units 822, 824, 832 between a plurality of states so as to reduce or increase the intensity of the respective drying effect associated with each drying unit. The plurality of states may include a dormant state and an operating state. Various dried consumables may be achieved depending on the number of first drying units 822, second drying units 824, and/or third drying units 832 activated. In other words, the intensity of heat energy and cold drying effect generated by the respective drying units 822, 824, 832 may be varied. In general heat drying and cold drying may be alternated to provide an optimal drying profile for a particular type of consumable. The alternation between heat drying and cold drying can also be customized and/or calibrated depending on the type of consumable and the amount of moisture naturally occurring in the consumable. It is appreciable that consumable having more water content, e.g. fruits, may require more exposure time to the heat drying units and/or the cold drying units.

In general, the consideration for providing an optimal drying profile can be based at least on the amount and type of consumable(s) to be dried. In some embodiments, the amount of consumable(s) to be dried may be measured in terms of the thickness of the consumable, for example the thickness of a bundle of tobacco leaves. A thicker bundle of consumable typically requires greater exposure to either the heat drying unit(s) and/or the cold drying unit(s).

In general the number of heat drying units or cold drying units may be arranged in an alternating configuration relative to each other (i.e. a heat dry unit alternating with a cold dry unit); a series of M number of cold dry units followed by a series of N number of heat dry units or vice-versa, where M, N are positive integers. It is contemplated that M = N or M ≠ N. In some embodiments M may be greater than N, i.e. M > N. In other embodiments, M may be less than N, i.e. M < N.

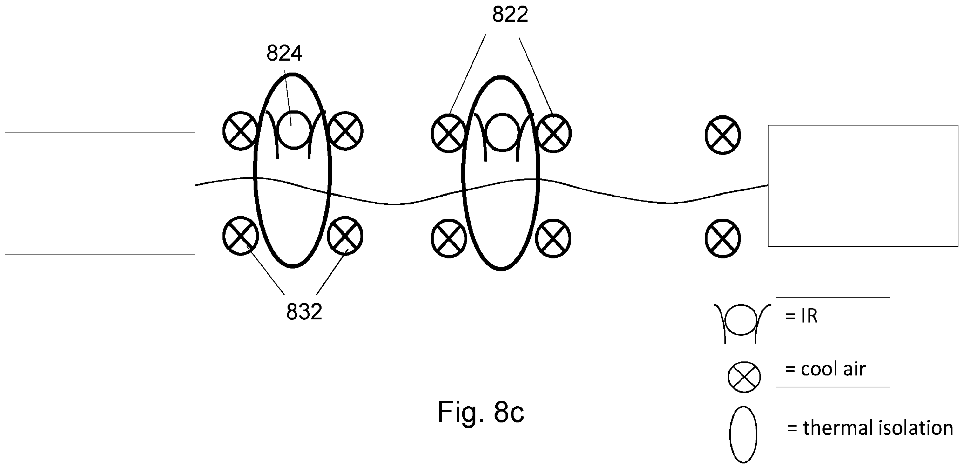

Fig. 8c shows another operating mode of the apparatus 800 wherein the first drying units 822 and the second drying units 824 are thermally isolated with respect to each other. The thermal isolation may be achieved by having dividers between the first drying units 822 and second drying units 824. Such dividers may be suitably made from heat-resistant materials.

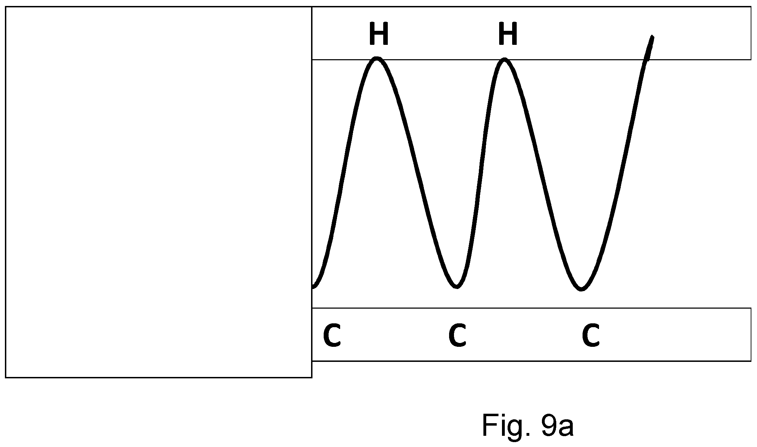

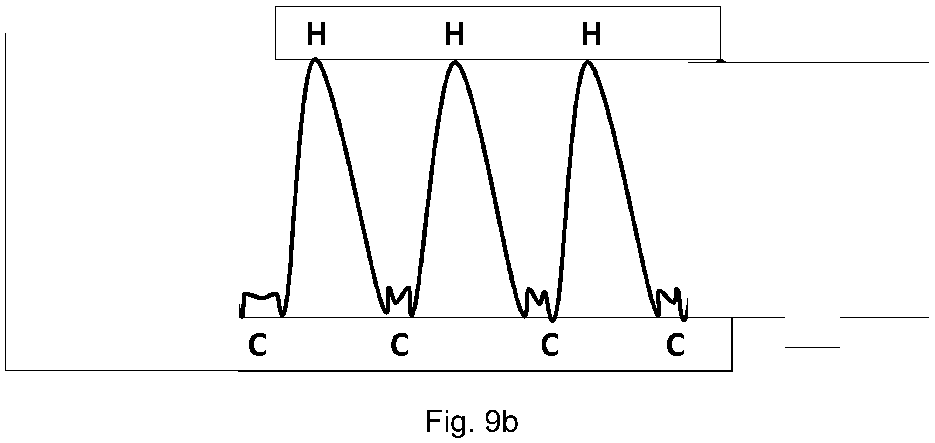

Fig. 9a and 9b shows a possible drying profile of a consumable product, such as tobacco leaves, based on the multiple cycles of heating or cooling. It is contemplated that each peak may correspond to a relatively high temperature of above 100 degrees Celsius and each trough may correspond to a relatively low temperature of below 0 degrees Celsius. In some embodiments, the relatively low temperature may be well below 0 degrees Celsius.

Fig. 9a shows a temperature profile obtained for the consumable when the conveyor belt 812 moves at a relatively constant speed. The portions labelled 'H' indicate heating, when the consumable product is exposed to the second drying unit 824. The portions labelled 'C' indicate cold drying, for example, via freeze drying, when the consumable product is exposed to the first drying unit(s) 822 or the third drying unit(s) 832.

In the embodiment of Fig. 9a, the conveyor system 810 may be configured such that the amount of exposure of the consumable to each of the first drying unit 822 is less than 1 second, and the amount of exposure to each of the second drying unit 824 is less than 1 second. In other words, the amount of time the consumable is exposed to a relatively high temperature (as exposed to each second drying unit 824) and to the relatively low temperature (as exposed to each first drying unit 822 and/or third drying unit 832) is less than 1 second. In some embodiments, the first exposure duration and/or the second exposure duration may be less than 1 minute, less than 10 minutes, or less than an hour.

Fig. 9b shows a temperature profile obtained for the consumable when the conveyor belt 812 moves at a varying speed, slowing down when the consumable product is exposed to first drying unit(s) 822 and third drying unit(s) 832. The portions labelled 'H' indicate heating, when the consumable product is exposed to the second drying unit 824. The portions labelled 'C' indicate cold drying, for example, via freeze drying, when the consumable product is exposed to the first drying unit(s) 822 or the third drying unit(s) 832.

In the embodiment shown in Fig. 9b, the conveyor belt 812 moves slower when the consumable is exposed to the first drying unit 822 and/or third drying unit 832. In other words, the consumable is exposed to cold drying longer than it is exposed to heat drying.

In some embodiments, second exposure duration of the consumable to the heating unit(s) is significantly less than the first exposure duration of the consumable to the cooling unit(s).

In some embodiments, each of the first drying units 822 may be configured to be providing varying temperatures with respect to other first drying units. In some embodiments, each of the second drying units 824 may be configured to be providing varying temperatures with respect to other second drying units.

While the apparatus 800 is described with reference to two heating modules 820 and 830, it is appreciable that the apparatus 800 can work with the first drying module 820 alone to provide a combination of heat drying and cold drying for one or more types of consumables.

It is contemplated that the apparatus 800 may be combined with any features of the apparatus 200, 300, 400, 500, 600, 700. For example, the first drying unit 822 and third drying unit 832 may include the super-cooler 410 for the provision of freeze drying. In another example, one or more of the second drying units 824 may be configured to provide heating at a temperature of less than 100 degrees Celsius.

It is appreciable that where there are multiple first drying units and multiple second drying units, the first exposure duration associated with each of the first drying units may be separately and/or independently adjusted. Likewise, the second exposure duration associated with each of the second drying units may be separately and/or independently adjusted. It is also appreciable that the amount of heat energy generated by each second drying unit may differ from the heat energy generated by other second drying units, and the cold drying effect produced by first drying unit may differ from the cold drying effect produced by other first drying units.

According to another aspect of the disclosure there is a method for drying a consumable. The method comprises the steps of: a. moving the consumable on a conveyor system; b. exposing the consumable to at least one cold drying unit for a first exposure duration and exposing the consumable to at least one heat drying unit for a second exposure duration; and c. varying the speed of the conveyor system to vary the first exposure duration of the consumable to the at least one cold drying unit and the second exposure duration to the at least one heat drying unit.

In some embodiments, the method further comprises the step of adjusting the at least one first drying unit and/or the at least one second drying unit between a plurality of states to vary an intensity of the respective drying effect associated with each of at least one first drying unit and/or the at least one second drying unit.

It is contemplated that the method for drying the consumable may be performed with the apparatus 800. In particular, the cold drying unit may correspond to the first drying unit 822 or third drying unit 832. The heat drying unit may correspond to the second drying unit 824.

Where the consumable to be dried is a tobacco product, it is appreciable that additional materials may be added to the tobacco product of the present disclosure. Such additional materials may include material to improve tensile strength of the tobacco product(s), material(s) to confer certain flavours, and/or filters. The additional materials may include natural and synthetic materials.

It is appreciable that while some embodiments of the methods and apparatus have been described in the context of manufacturing a tobacco product, the method and apparatus may be method(s) or apparatus, as the case may be, for drying tobacco products and/or intermediate tobacco products at different stages of the manufacturing process for tobacco products.

It should be further appreciated by the person skilled in the art that variations and combinations of features described above, not being alternatives or substitutes, may be combined to form yet further embodiments falling within the intended scope of the invention.

### Reference numerals

100: Method for drying tobacco products
S102: Step of mixing a plurality of base tobacco materials to form a base mix
S104: Step of obtaining an aqueous mixture from the base mix
S106: Step of positioning the aqueous mixture onto a conveyor system to form a sheet
S108: Step of drying the resultant sheet
200: Apparatus
202: Enclosed area
204: Rest area/ conveyor system
206: Device for facilitating removal of moisture
300: Apparatus
302: Enclosed area
304: Rest area
306: Device for facilitating removal of moisture
308: Vacuum pump
310: Cooler device
312: Heater
400: Apparatus
402: Enclosed area
404: Rest area
406: Device for facilitating removal of moisture
408: Vacuum pump
410: Super-cooler
500: Apparatus
600: Apparatus
602: Enclosed area
604: Rest area/conveyor system
606: Device for facilitating removal of moisture
608: Vacuum pump
610: Cooler device
700: Apparatus
800: Apparatus
810: Conveyor system
812: conveyor belt
820: First drying module
822: First drying unit(s)
824: Second drying unit(s)
830: Second drying module
832: Third drying unit(s)

## Claims

1. An apparatus for drying a consumable, comprising
a conveyor system for receiving the consumable;
a first drying module comprising at least one first drying unit and at least one second drying unit, the first drying unit configured to provide cold drying and the second drying unit configured to provide heat drying;
wherein a first exposure duration of the consumable to the at least one first drying unit and/or a second exposure duration of the consumable to the at least one second drying unit is adjustable via controlling a speed of the conveyor system.

2. The apparatus of claim 1, wherein an intensity of drying effect is adjustable via switching the at least one first drying unit between a plurality of states and/or switching the at least one second drying unit between the plurality of states.

3. The apparatus of claim 1 or 2, further comprises a second drying module, the second drying module comprises a third drying unit to provide cold drying.

4. The apparatus of any one of the preceding claims, wherein the first drying module and the second drying module are positioned at opposing sides of the conveyor system.

5. The apparatus of any one of claims 2 to 4, wherein the plurality of states include an operating state and a dormant state.

6. The apparatus of any one of the preceding claims, wherein the second exposure duration is less than the first exposure duration.

7. The apparatus of any one of the preceding claims, further comprising a heat exchange system arranged to regulate the moisture of an ambient environment.

8. The apparatus of claim 8, wherein the at least one first drying unit is configured to provide cold drying at a temperature of below 0 degrees Celsius.

9. The apparatus of any one of the preceding claims, wherein the consumable is a tobacco product, a non-tobacco product, or a combination of a tobacco product and a non-tobacco product.

10. The apparatus of any one of the preceding claims, wherein the at least one second drying unit is configured to provide heat drying at a temperature of less than 100 degrees Celsius or at a temperature of above 100 degree Celsius.

11. The apparatus of any one of the preceding claims, wherein the at least one first drying unit and the at least one cold drying unit are arranged adjacent to each other.

12. The apparatus of any one of the preceding claims, wherein the at least one second drying unit comprises a super-cooler.

13. The apparatus of any one of the preceding claims, wherein the consumable is a tobacco product, the tobacco product includes one or more of the following: sheets, rolls, pallets, rods, powder, slurry, paste.

14. A method for drying a consumable, comprising the steps of: -
a. moving the consumable on a conveyor system;
b. exposing the consumable to at least one cold drying unit for a first exposure duration and exposing the consumable to at least one heat drying unit for a second exposure duration; and
c. varying the speed of the conveyor system to vary the first exposure duration of the consumable to the at least one cold drying unit and the second exposure duration to the at least one heat drying unit.

15. The method of claim 14, further comprising the step of adjusting the at least one first drying unit and/or the at least one second drying unit between a plurality of states to vary an intensity of the respective drying effect associated with each of at least one first drying unit and/or the at least one second drying unit.
